# EUROPÄISCHE PATENTSCHRIFT

(11) **EP 2 595 809 B1**
(45) Veröffentlichungstag und Bekanntmachung des Hinweises auf die Patenterteilung: **01.04.2015**
(21) Anmeldenummer: 11736003.2
(22) Anmeldetag: 20.07.2011
(51) Int. Cl.: B32B 27/28, B32B 27/08, B32B 27/30, B32B 27/36, B32B 37/14, B32B 38/06, B42D 15/00, B42D 25/00, B42D 25/328, B42D 25/355

(54) **SICHERHEITSFADEN FÜR DATENTRÄGER SOWIE DATENTRÄGER UND DEREN HERSTELLUNG**
SECURITY THREAD FOR DATA CARRIER, DATA CARRIER AND ITS METHOD OF PROUCTION
FIL DE SECURITE POUR SUPPORT DE DONNEES ET SUPPORT DE DONNEES ET LEUR FABRICATION

(30) Priorität: 22.07.2010 DE 102010031923
(43) Veröffentlichungstag der Anmeldung: 29.05.2013
(73) Patentinhaber: Giesecke & Devrient GmbH, 81677 München (DE)
(72) Erfinder: ENDRES, Günter, 81547 München (DE); STAHL, Jürgen, Karl, 803335 München (DE); HOFFMANN, Lars, 93057 Regensburg (DE)
(86) Internationale Anmeldenummer: PCT/EP2011/003648
(87) Internationale Veröffentlichungsnummer: WO 2012/022413

(56) Entgegenhaltungen:
- DE-A1- 2 140 471
- GB-A- 1 400 998
- US-A- 4 971 646

## Beschreibung

Die Erfindung betrifft einen mehrschichtigen Sicherheitsfaden, der in einen kartenförmigen Datenträger integriert wird, sowie einen mehrschichtigen, insbesondere kartenförmigen Datenträger mit darin integriertem Sicherheitsfaden und Verfahren zur Herstellung des Datenträgers und des Sicherheitsfadens.

Es ist bekannt, zum Schutz gegen Fälschungen Sicherheitsfäden in Wertdokumente einzubringen, beispielsweise in Banknoten. Es ist desweiteren bekannt, derartige Sicherheitsfäden auch in mehrschichtige Kunststoffkarten einzubringen, wie zum Beispiel Kreditkarten, Debitkarten, Bankkarten, Reisepässe, Führerscheine, Mitarbeiterausweise, Personalausweise, Zutrittskarten, Mitgliedskarten und dergleichen. Als problematisch hat sich erwiesen, dass die Sicherheitsfäden innerhalb des Kartenaufbaus eine Sollbruchstelle bilden können. Diese Gefahr besteht insbesondere bei der Verwendung von Fäden mit einer Breite von mehr als 1 mm, da sich bei einer Beanspruchung der Karte im Gebrauch - etwa durch Biegen - der Faden im Aufbau von den angrenzenden Kartenschichten löst. Darüber hinaus besteht die Gefahr, dass der Sicherheitsfaden aus dem Verbund herausgelöst und unerlaubt wieder verwendet wird.

Die EP 0 037 507 B1 beschreibt eine Ausweiskarte mit darin unlösbar integriertem Sicherheitsfaden. Der Sicherheitsfaden wird in der Karte befestigt, und die Kartenschichten werden vorzugsweise vollflächig durch Verkleben oder Verschweißen miteinander verbunden, so dass der Sicherheitsfaden untrennbar mit diesen verbunden und in dieser eingebettet ist. Darüber hinaus werden die Materialeigenschaften so gewählt, dass ein Versuch des Herauslösens zu einer Zerstörung des Sicherheitsfadens führt. Insbesondere wird die Materialstärke des Sicherheitsfadens mit einer Dicke von 0,02 bis 0,05 mm sehr dünn gewählt und die Materialbeschaffenheit sehr spröde eingestellt. Der Sicherheitsfaden kann aus Metall, einer Metallegierung, aus Glas oder aus Kunststoff bestehen. Weiterhin wird vorgeschlagen, dem Sicherheitsfaden zusätzliche Merkmale zu geben. Die zusätzlichen Sicherheitsmerkmale können beispielsweise die besondere Art des Metalls bzw. der Metalllegierung, eine Radioaktivität, Magnetismus oder Fluoreszenz, ein bestimmter ohmscher Widerstand pro Längeneinheit sowie eine Eloxierung des Fadens in unterschiedlichen Farben sein.

Die WO 2008/060918 A1 schlägt vor, einen Sicherheitsfaden, der als sogenannte Color-Shift-Folie ausgebildet ist, in den Schichtverbund einer zweischichtigen Kunststoffkarte fest zu integrieren. Eine Color-Shift-Folie besteht aus mehreren hundert dünnen Schichten biaxial verstreckten Kunststoffs. Um einen festen Verbund zwischen dem Sicherheitsfaden und den daran angrenzenden Schichten der Karte zu gewährleisten, weist der Sicherheitsfaden eine Vielzahl von beliebig geformten Durchbrechungen auf. Wenn die Kartenschichten anschließend unter Anwendung von Druck und Temperatur erweicht und miteinander verschweißt werden, ergibt sich aufgrund der Durchbrechungen eine mechanische Verankerung des Sicherheitsfadens im Schichtaufbau. Zusätzlich wird der Sicherheitsfaden mit einem Primer oder einem Kleber beschichtet, um die Haftung zwischen dem Sicherheitsfaden und den angrenzenden thermoplastischen Oberflächen zu erhöhen. Weiter wird vorgeschlagen, zusätzliche Sicherheitselemente, wie beispielsweise ein Hologramm, auf eine der Kartenschichten aufzubringen.

Die vorbeschriebene Problematik des zuverlässigen Verbindens eines Sicherheitsfadens stellt sich in ähnlicher Weise auch mit solchen Sicherheitsfäden, die eine holographische Information vermittelnde Beschichtung tragen. Derartige Sicherheitsfäden sind beispielsweise im Zusammenhang mit Banknoten bekannt, können aber auch als sogenannter "Laminierfaden" vollständig in einen Kunststoffkartenaufbau integriert werden, das heißt einschließlich der PET-Trägerfolie, auf der die holographische Information vermittelnde Beschichtung angeordnet ist. Alternativ kann lediglich die holographische Information vermittelnde Beschichtung übertragen und die Trägerfolie entsorgt werden. Im letztgenannten Fall spricht man von einem sogenannten "Transferfaden". Da im Aufbau des Transferfadens eine Releaseschicht zwischen der die holographische Information vermittelnden Beschichtung und der Trägerfolie vorgesehen ist, um die Trägerfolie nach dem Applikationsprozess einfach ablösen zu können, ist es schwierig, einen festen Verbund zwischen der die holographische Information vermittelnden Beschichtung und einer daran angrenzenden Kartenschicht zu erzielen, wenn ein solcher Transferfaden in einen mehrschichtigen Kartenaufbau integriert werden soll. Aber auch die Integration eines Laminierfadens, also einschließlich der Trägerfolie, in einen Kartenschichtaufbau, führt zu den eingangs genannten Problemen, insbesondere wenn die Kartenschichten Polycarbonat-Schichten sind.

Die in EP 0 037 507 B1 und WO 2008/060918 A1 angegebenen Lösungen zum zuverlässigen Einbetten eines Sicherheitsfadens in den Kartenschichtaufbau, insbesondere eines Laminierfadens mit Trägerfolie und einer holographischen Information vermittelnden Beschichtung, sind relativ aufwendig.

Aufgabe der vorliegenden Erfindung ist es, einen Sicherheitsfaden vorzuschlagen, der eine holographische Information vermittelnde Beschichtung trägt und in einfacher Weise zuverlässig in den Schichtverbund eines mehrschichtigen Datenträgers integrierbar ist. Insbesondere betrifft dies das Einbringen eines derartigen Sicherheitsfadens in einen kartenförmigen Datenträger, der Polycarbonat-Schichten aufweist oder sogar ausschließlich aus Polycarbonat-Schichten besteht.

Diese Aufgabe wird durch einen Sicherheitsfaden und einen damit ausgestatteten mehrschichtigen Datenträger, sowie durch entsprechende Herstellungsverfahren, mit den Merkmalen der unabhängigen Ansprüche gelöst. In davon abhängigen Ansprüchen sind bevorzugte Ausführungen und Weiterbildungen der Erfindung angegeben.

Dementsprechend wird dazu vorgeschlagen, die Oberfläche des Sicherheitsfadens, mit der der Sicherheitsfaden an eine Polycarbonat-Schicht des Datenträgers grenzt, seinerseits als eine Polycarbonat-Schicht auszubilden. Anders ausgedrückt umfasst der erfindungsgemäße mehrschichtige Sicherheitsfaden eine erste Oberfläche und eine zweite Oberfläche. Auf der ersten Oberfläche ist die holographische Information vermittelnde Beschichtung angeordnet, während die zweite Oberfläche durch die Polycarbonat-Schicht gebildet wird. Dazu kann die Trägerfolie entweder insgesamt als eine einzige Polycarbonat-Schicht ausgebildet sein, oder sie kann mehrschichtig ausgebildet sein, wobei die außen liegende Schicht eine Polycarbonat-Schicht ist.

Wird ein solcher Sicherheitsfaden zwischen die Polycarbonat-Schichten z.B. einer Kunststoffkarte unter Anwendung von Druck und Temperatur einlaminiert, so kann auf der Trägerseite des Sicherheitsfadens auf einen weiteren Kleber verzichtet werden, da sich die Polycarbonat-Schicht der Trägerfolie des Sicherheitsfadens mit der daran angrenzenden Kartenschicht aus Polycarbonat, sei es eine transparente Deckschicht oder eine Trägerschicht bzw. Kemfolie der Karte, unmittelbar verbindet. Der zuverlässige Verbund zwischen dem Sicherheitsfaden und der betreffenden Kartonschicht ist somit allein aufgrund der vergleichbaren Materialeigenschaften durch Anwendung von Druck und Temperatur erreichbar. Die Verbindung der beiden Schichten ist "unmittelbar" in dem Sinne, dass ein dazwischen liegender Kleber und/oder Primer entfällt. Die Verbindung basiert stattdessen auf einem "Verschmelzen" der Schichten miteinander im Wege des Heißlaminierens aufgrund chemischer und physikalischer Effekte.

Anstelle von Polycarbonat als Trägerfolie des Sicherheitsfadens können für die Trägerfolie auch andere Materialien verwendet werden, die mit Polycarbonat-Schichten im Wege der Heißlaminierung unmittelbar zu einem Schichtverbund verarbeitet werden können, wie etwa PETG (Polyethylenterephthalat-Glycol-Copolymer) oder PVC (Polyvinylchlorid). Grundsätzlich sollten die miteinander zu verbindenden Stoffe einerseits polar sein, was bei PC und etwa PVC gegeben ist, und andererseits mit ihrer Glasübergangstemperatur nicht zu weit auseinander liegen. Alternativ können für das Material der Trägerfolie des Sicherheitsfadens und für die Materialien der damit zu verbindenden Schichten auch unterschiedliche thermoplastische Kunststoffe verwendet werden, vorausgesetzt, dass sie sich miteinander verbinden lassen, z.B. durch das oben genannte Verfahren des Heißlaminierens. Aufgrund der unterschiedlichen Glasübergangstemperaturen lässt sich beispielsweise ein Sicherheitsfaden mit PVC als Trägerfolie mit guter Verbundfestigkeit in einen PC-Schichtaufbau laminieren.

Die Dicke der Trägerfolie wird vorzugsweise gering gewählt und liegt im Bereich von 20 µm bis 50 µm, besonders bevorzugt im Bereich von 25 µm bis 35 µm. Dadurch wird die Wahrscheinlichkeit, dass ein Faden beim Versuch des Herauslösens aus dem Schichtverbund zerstört wird, erhöht.

Um den Sicherheitsfaden nicht nur mit seiner Trägerfolie sondern auch mit der die holographische Information vermittelnden Beschichtung im Schichtverbund fest zu fixieren, weist die holographische Information vermittelnde Beschichtung außenseitig eine heißsiegelfähige Schicht auf, die beim Heißlaminiervorgang mit der daran angrenzenden Kartenschicht einen festen Verbund eingeht. Im Falle einer Karte aus Polycarbonat-Schichten, bei der der Sicherheitsfaden also beidseitig an Polycarbonat-Schichten des Schichtverbunds angrenzt, wird die heißsiegelfähige Schicht vorzugsweise auf Basis eines hydroxy-modifizierten Vinylcopolymers hergestellt. Das bedeutet, dass das hydroxy-modifizierte Vinylcopolymer den Hauptbestandteil bzw. wesentlichen Bestandteil des Schichtmaterials bildet und darüber hinaus noch übliche Zusatzstoffe, Lösungsmittel und dergleichen vorhanden sein können. Die Auftragstärke des Heißsiegellacks kann zwischen 0,5 und 5 µm liegen und liegt vorzugsweise zwischen 1 µm und 3 µm.

Die holographische Information vermittelnde Beschichtung wird auf der Trägerfolie vorzugsweise als Prägehologramm ausgeführt. Dazu wird die Folie mit einem Prägelack vollflächig überdruckt, in den anschließend eine diffraktive Struktur oder auch eine achromatisch wirksame Struktur eingeprägt wird. Beide Strukturen wirken als optisches Gitter. Sofern diese Gitter gemäß den Prinzipien der Lichtbrechung diffraktiv wirken, spricht man von Hologrammen. Dabei kommt es zu farbigen Erscheinungen bei Tageslichtbetrachtung. Kommt es aufgrund der Gitter jedoch lediglich zu winkelabhängigen Reflektionen über das ganze optisch sichtbare Spektrum, beispielsweise im Falle sogenannter Sägezahngitter, so spricht man von achromatischen Strukturen. Diese ergeben flächige hell-matte Effekte. Im Sinne der vorliegenden Erfindung fallen unter den Betriff der "holographischen Information" sowohl diffraktive Gitterstrukturen als auch achromatisch wirksame Gitterstrukturen.

Als Prägelack verwendbar sind die aus der Hologrammprägung von Transferfolien und Hologrammfäden bekannten thermoplastischen Prägelacke. Jedoch werden aufgrund der späteren Temperaturbelastung beim Einlaminieren des Sicherheitsfadens in den Schichtverbund ein strahlungshärtendes Prägelacksystem bevorzugt, beispielsweise ein UV- oder Elektronenstrahlungshärtendes Lacksystem. Das sind solche Lacksysteme, die strahlungsvernetzende Polymere im Lack enthalten. Besonders bevorzugt werden in diesem Falle radikalisch härtende Acrylatlacke, aber auch kationisch härtende Prägelacke können eingesetzt werden.

Besonders geeignet sind Lacke mit niedriger Viskosität. Die Viskosität der Lacke sollte bei Raumtemperatur im Bereich von 10 DIN-sec bis 30 DIN-sec (gemessen mit Ford 4 mm Becher), vorzugsweise im Bereich von 15 DIN-sec bis 25 DIN-sec liegen. Dadurch lassen sich die Lacke ohne die Notwendigkeit von Wärmezufuhr verarbeiten, so dass auch die vorgenannten dünnen Polycarbonatfolien mit ausreichender Produktionssicherheit verarbeitbar sind.

Den strahlungshärtbaren Lacken sind vorzugsweise flüssige Photoinitiatoren beigemischt. Photoinitiatoren starten den Vernetzungsprozess effizienter, weil sie einen deutlich höheren Wirkungsquerschnitt haben, als die eigentlichen UV-vernetzenden Polymere im Lack. Die Härtung wird dadurch bei kurzer intensiver Bestrahlung ermöglicht. Neben dem üblichen Absorptionsspektrum im UV-Wellenlängenbereich weisen die Photoinitiatoren vorzugsweise noch spezifische Absorptionslinien im sichtbaren Bereich auf. Dies ist von Bedeutung, wenn während des Prägevorgangs durch die Trägerfolie hindurch gehärtet wird und diese im Wellenlängenbereich der UV-Strahlung stark absorbiert, im sichtbaren Bereich dagegen durchlässig ist. Durch Verwendung von dotierten UV-Strahlern, zum Beispiel Fe- oder Gaoder Pb-Dotierung, lässt sich in dieser Kombination eine besonders stabile Verankerung eines UV-härtenden Lacks auf Polycarbonatfolien erzielen. Bei Fe-dotierten UV-Strahlern erhält man beispielsweise neben dem breitbandigen UV-Emissionsbereich eine starke Emission im sichtbaren Bereich von 400 bis etwa 450 nm, mit intensiven Emissionslinien beispielsweise bei etwa 436 nm. Bei Verwendung von Photoinitiatoren, die in diesem Wellenlängenbereich stark absorbieren, erfolgt die Härtung des Lacks sehr schnell.

Zur Erzielung der gewünschten Sichtbarkeit der diffraktiven oder achromatisch wirkenden geprägten Struktur wird vorzugsweise eine Reflexionsschicht auf die Prägelackschicht aufgebracht. Ohne eine solche Reflexionsschicht ist die holographische Information visuell nur schwach erkennbar. Besonders geeignet sind metallische Reflexionsschichten beispielsweise aus Aluminium, Kupfer oder Chrom, aber auch Eisen, Silber oder Gold und Goldton-Legierungen, die in Schichtstärken von 15 nm bis 50 nm vorzugsweise unmittelbar auf die geprägte Oberfläche aufgedampft werden. Anstelle einer metallischen Reflexionsschicht kann auch eine Beschichtung mit hoch brechenden Eigenschaften beispielsweise aus TiO₂ oder ZnS eingesetzt werden. Alternativ kann die Reflexionsschicht durch einen Überdruck mit einer metallpigmenthaltigen Farbe erzielt werden, wenn die Metallpigmente in dieser Farbe an die geprägte Struktur aufschwimmen. Die vorgenannten Metallschichten sind solchen metallpigmenthaltigen Farben jedoch optisch überlegen.

Vorteilhaft kann die Reflexionsschicht bereichsweise vollständig entfernt werden, um eine sogenannte Negativschrift, auch "clear text" genannt, zu erzeugen, der je nach Hintergrund stärker oder weniger stark oder auch nur bei Betrachtung im Durchlicht sichtbar ist. Derartige Durchbrechungen der Reflexionsschicht können in bekannte Weise durch Ätzverfahren oder Waschverfahren erzeugt werden. Beim Ätzverfahren werden die betreffenden Bereiche der Reflexionsschicht nachträglich im Ätzbad entfernt, während die betreffenden Bereiche beim Waschverfahren vor dem Aufbringen der Reflexionsschicht mit einer Waschfarbe bedruckt werden, wobei die Waschfarbe anschließend mit der darüber liegenden Reflexionsschicht ausgewaschen wird. Eine zusätzliche optische Information kann in den Faden integriert werden, indem auf die metallische Reflexionsschicht vollfächig oder partiell eine oder mehrere lasierende Farbschichten aufgebracht werden. Dadurch kann beispielsweise optisch eine farbige Grundierung für das optisch sichtbar hinterlegte Hologramm hinterlegt werden.

Die Reflexionsschicht wird vor dem Aufbringen der bereits erwähnten heißsiegelfähigen Lackschicht vorzugsweise noch mit einer Primerbeschichtung ausgestattet, um sie gegen Umwelt- und Chemikalieneinflüsse zu schützen. Diese Primerbeschichtung kann aus einer oder mehreren Lagen aufgebaut sein. Als Primer eignen sich beispielsweise Isocyanat-vernetzende Polyurethane. Die Schichtstärken für die Primerschichten bewegen sich zwischen 0,3 µm bis 5 µm und liegen vorzugsweise im Bereich von 0,7 µm bis 3 µm.

Das der Erfindung zugrunde liegende vorbeschriebene Prinzip der Verwendung eines laminierfähigen Sicherheitsfadens mit einer holographischen Information vermittelnden Beschichtung, der einen guten Verbund zwischen dem Material der Trägerfolie des Fadens und dem Material der angrenzenden Kartenschicht erzielt, lässt sich von den bisher beschriebenen Polycarbonat-Datenträgerschichten auch auf andere Schichtmaterialien übertragen. Beispielsweise könnte in einem aus Polyvinylchlorid-(PVC)-Schichten bestehenden Kartenaufbau als Material für die Trägerfolie des Sicherheitsfadens ebenfalls PVC verwendet werden. In einem Kartenaufbau aus PETG-Kartenschichten (PETG = Polyethylenterephthalat-Glycol-Copolymer) bestünde dagegen das Material der Trägerfolie des Sicherheitsfadens vorzugsweise aus PETG. Das erfindungsgemäße Prinzip ist somit auf solche Materialkombinationen übertragbar, die durch Heißlaminieren ohne Einsatz eines Klebers oder Primers einen festen Verbund miteinander eingehen können. Ein entsprechender mehrschichtiger Datenträger zeichnet sich dann dadurch aus, dass die Trägerfolie oder zumindest die außen liegende Schicht der Trägerfolie des die holographische Information vermittelnde Beschichtung tragenden Sicherheitsfadens mit der angrenzenden Schicht des Datenträgers unmittelbar verbunden ist. Besonders bevorzugt sind diese beiden miteinander zu verbindenden Schichten auf Basis desselben thermoplastischen Kunststoffs hergestellt.

Zur Herstellung eines solchen mehrschichtigen, insbesondere kartenförmigen Datenträgers werden dementsprechend eine Trägerschicht des Datenträgers und eine transparente Deckschicht des Datenträgers derart mit dem Sicherheitsfaden zusammengeführt, dass die Trägerfolie des Sicherheitsfadens mit ihrer freiliegenden Oberfläche (das ist die Oberfläche, die der die holographische Information vermittelnden Beschichtung gegenüberliegt) unmittelbar - das heißt ohne einen Kleber oder Primer - an die transparente Deckschicht oder vorzugsweise an die Trägerschicht angrenzt. Dieser Lagenaufbau wird anschließend unter Anwendung von Druck und Temperatur miteinander derart laminiert, dass die Trägerfolie des Sicherheitsfadens mit der daran angrenzenden Kartenschicht einen Verbund eingeht.

Nachfolgend werden bevorzugte Ausführungsbeispiele der Erfindung anhand der begleitenden Zeichnungen erläutert. Darin zeigen:
- Figur 1: eine Kunststoffkarte mit Sicherheitsfaden in Draufsicht,
- Figur 2: den Sicherheitsfaden der Kunststoffkarte aus Figur 1 schematisch im Querschnitt,
- Figur 3: einen Schichtaufbau der Kunststoffkarte aus Figur 1 gemäß einem ersten Ausführungsbeispiel,
- Figur 4: einen Schichtaufbau der Kunststoffkarte aus Figur 1 gemäß einem zweiten Ausführungsbeispiel,
- Figur 5: einen Schichtaufbau der Kunststoffkarte aus Figur 1 gemäß einem dritten Ausführungsbeispiel und
- Figur 6: einen Schichtaufbau der Kunststoffkarte aus Figur 1 gemäß einem vierten Ausführungsbeispiel.

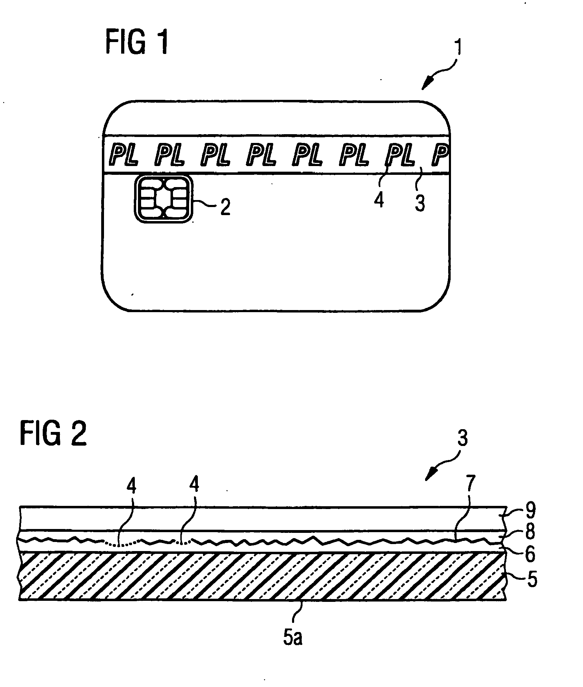

Figur 1 zeigt einen mehrschichtigen kartenförmigen Datenträger 1, der hier als Chipkarte mit einem Kontakt-Chipmodul 2 ausgeführt ist, in Draufsicht. Ein unter einer transparenten Deckschicht liegender Sicherheitsfaden 3 ist in den Schichtverbund des mehrschichtigen Datenträgers einlaminiert und erstreckt sich von einer Chipkartenkante zur gegenüberliegenden Chipkartenkante. Der Sicherheitsfaden 3 weist visuell erkennbare Markierungen 4 auf, welche durch partielle Demetallisierung einer metallischen Beschichtung des Sicherheitsfadens 3 realisiert sind. Alternativ kann auch auf die Demetallisierung verzichtet werden.

Der Sicherheitsfaden 3 der Chipkarte gemäß Figur 1 ist in Figur 2 schematisch im Querschnitt dargestellt. Die jeweiligen Dimensionen der Schichtdicken sind zueinander nicht maßstabsgetreu. Dementsprechend weist der Sicherheitsfaden 3 eine Trägerfolie 5 auf, welche hier einschichtig ausgeführt ist und eine Polycarbonat-Schicht ist. Der Polycarbonat-Schicht können die üblichen Zusatzstoffe beigemengt sein, wie beispielsweise Füllstoffe, Farbstoffe und dergleichen. Die Trägerfolie kann für dieses Ausführungsbeispiel eine Dicke von 30 µm besitzen.

Anstatt einschichtig ausgebildet zu sein, kann die Trägerfolie 5 auch mehrschichtig ausgebildet sein, wobei dann zumindest die außen liegende Oberfläche 5a der Trägerfolie 5 durch eine Polycarbonat-Schicht gebildet wird. Dies ist wichtig zur Herstellung eines festen Verbundes der Trägerfolie 5 mit einer daran angrenzenden Polycarbonat-Schicht des Datenträgers 1. Ein Beispiel für eine mehrschichtige Folie ist eine Polycarbonatfolie mit chemischer Oberflächenbehandlungsschicht, die die Haftung des Lacks 6 unterstützt. Entsprechende Oberflächenbeschichtungen kommen aus der Stoffgruppe der Acrylate oder anderer geeigneter Haftvermittler. Sie werden entweder direkt bei der Herstellung der Folie oder nachträglich in einem eigenen Druckwerk oder analogem Aufbringverfahren auf die Polycarbonatfolie appliziert. Die Dicke derartiger Schichten beträgt 0,1 µm bis 5 µm. Diese Schichten können auch dazu dienen, die Oberflächenrauigkeit der Polycarbonatfolie zu reduzieren, um bei Applikation des Lacks 6 eine brillante Optik zu erhalten.

Auf der der Oberfläche 5a gegenüberliegenden Seite der Trägerfolie 5 ist ein mittels UV-Strahlung härtbarer Lack 6 aufgebracht, der flüssige Photoinitiatoren enthält und vor dem Präge- und Aushärteprozess eine Viskosität von etwa 20 DIN-sec besitzt. In diese Lackschicht 6 wurde eine Hologrammstruktur eingeprägt, bevor der Lack ausgehärtet war. Die Dicke der Lackschicht 6 beträgt im Mittel etwa 3 µm.

Die geprägte Oberfläche der Lackschicht 6 ist mit einer metallischen Reflexionsschicht 7, beispielsweise Aluminium, Chrom oder Kupfer, bedampft, wobei in den Bereichen 4 im Wege des vorbeschriebenen Waschverfahrens demetallisierte Zonen geschaffen wurden, die zusätzlich zu der holographischen Information, die durch die diffraktive Prägestruktur der Lackschicht 6 vermittelt wird, weitere Informationen vermitteln. Alternativ kann auch auf die Demetallisierung verzichtet werden. Diese weiteren Informationen können visuell erkennbare Muster, Zeichen, Code oder Logos darstellen. Die metallische Schicht kann zusätzlich vollflächig oder partiell mit einer oder mehreren lasierenden Farbschichten bedruckt werden, um so eine zusätzliche optische Information einzubringen.

Die metallische Reflexionsschicht 7, die zum Beispiel eine Dicke von nur 30 nm besitzt, ist mit einer Primerbeschichtung 8 versehen, die aus einem Isocyanat-vernetzten Polyurethan besteht und ihrerseits beispielsweise eine Dicke von etwa 2 µm aufweist. Über allem ist eine heißsiegelfähige Lackschicht 9 aus einem hydroxy-modifizierten Vinylcopolymer mit einer Dicke von beispielsweise wiederum etwa 2 µm aufgetragen. Diese heißsiegelfähige Lackschicht 9 hat die Funktion, eine zuverlässige und dauerhafte Verbindung mit einer daran angrenzenden Polycarbonat-Schicht des Kartenschichtverbunds herzustellen, wenn der gesamte Schichtaufbau unter Anwendung von Druck und Temperatur zu einem einheitlichen Schichtverbund verbunden wird.

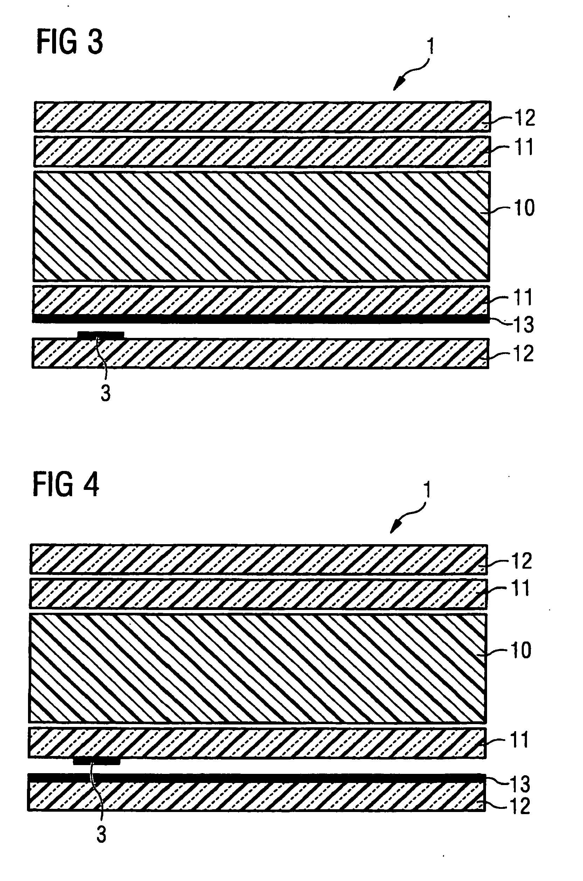

Figuren 3 bis 6 zeigen verschiedene Varianten von Kartenschichtaufbauten mit darin integriertem Sicherheitsfaden 3, wobei diese Varianten keineswegs abschließend sind.

In den Figuren 3 und 4 besteht der Kartenschichtaufbau aus insgesamt fünf Kartenschichten, nämlich einer Kartenkernfolie 10, die beidseitig jeweils mit zwei Deckschichten 11 und 12 versehen ist. Die Kartenkernfolie ist in der Regel opak und auch die innen liegenden Deckschichten 11 können opak sein. Die außen liegenden Deckschichten 12 sind dagegen zumindest teilweise transparent, um einen darunter liegenden Aufdruck 13 sowie den ebenfalls unter der äußeren Deckschicht 12 liegenden Sicherheitsfaden 3 von außen visuell erkennen zu können. In Figur 3 ist der Aufdruck 13 auf der innen liegenden Deckschicht 11 angeordnet, und der Sicherheitsfaden 3 liegt zwischen dem Aufdruck 13 und der außen liegenden Deckschicht 12. In Figur 4 befindet sich der Aufdruck 13 dagegen auf der Innenseite der außen liegenden Deckschicht 12 und der Sicherheitsfaden 3 zwischen der Deckschicht 12 mit dem Aufdruck 13 und der innen liegenden Deckschicht 11. In dem Ausführungsbeispiel gemäß Figur 4 ist selbstverständlich darauf zu achten, dass die Druckschicht 13 im Bereich des Sicherheitsfadens 3 ausreichend transparent ist, um die holographische Information des Sicherheitsfadens 3 nicht zu verdecken.

In allen dargestellten Ausführungsbeispielen wird der Sicherheitsfaden 3 zunächst mittels des Heißsiegellacks 9 auf die betreffende Deckschicht 12 (Figur 3) bzw. 11 (Figur 4) aufgebracht. Im Ausführungsbeispiel gemäß Figur 3 sind dementsprechend die Primerschicht 8 und der Heißsiegellack 9 transparent, so dass die darunter befindliche geprägte holographische Information sichtbar bleibt. Im Ausführungsbeispiel gemäß Figur 4 sind dagegen jedenfalls die Trägerfolie 5 und die geprägte Lackschicht 6 optisch transparent, um auch in diesem Ausführungsbeispiel zu gewährleisten, dass die geprägte holographische Information durch die außen liegende Deckschicht 12 hindurch sichtbar ist.

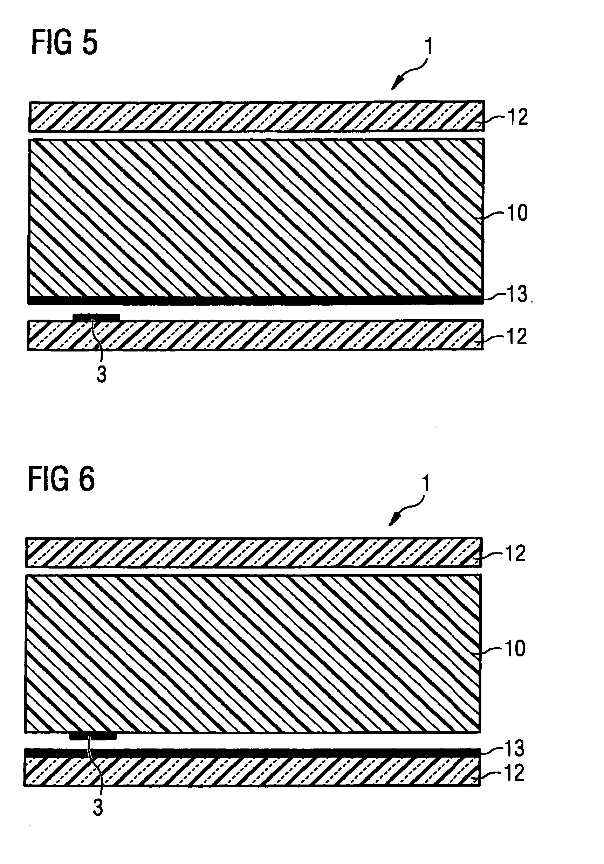

Figuren 5 und 6 zeigen entsprechende Ausführungsbeispiele mit lediglich einer außen liegenden Deckschicht 12. Der Unterschied zu den Ausführungsbeispielen gemäß Figuren 3 und 4 besteht allein darin, dass der Aufdruck 13 (Figur 5) bzw. der Sicherheitsfaden 3 (Figur 6) unmittelbar auf der Kernfolie 10 aufgebracht sind.

In allen Ausführungsbeispielen sind zumindest die Deckschichten 11 und 12 Polycarbonatschichten und zumindest in den Ausführungsbeispielen gemäß Figuren 5 und 6 besteht auch die Kartenkernfolie 10 aus einer Polycarbonat-Schicht. Soweit die vorgenannten Deckschichten und Kartenkernfolien ihrerseits mehrschichtig ausgeführt sind, sind jedenfalls ihre außen liegenden Oberflächen durch Polycarbonat-Schichten gebildet.

## Patentansprüche

1. Mehrschichtiger Sicherheitsfaden (3) für einen kartenförmigen Datenträger (1), umfassend eine Trägerfolie (5) mit einer ersten Oberfläche und einer zweiten Oberfläche (5a), wobei die erste Oberfläche eine holographische Information vermittelnde Beschichtung (6, 7, 8, 9) trägt, wobei die zweite Oberfläche (5a) durch eine Schicht aus einem thermoplastischen Kunststoff, die im Wege der Heißlaminierung mit einer Polycarbonatschicht einen festen Verbund eingehen kann, gebildet wird, **dadurch gekennzeichnet, dass** die Dicke der Trägerfolie (5) im Bereich von 20 µm bis 50 µm, vorzugsweise im Bereich von 25 µm bis 35 µm, liegt.

2. Sicherheitsfaden nach Anspruch 1, **dadurch gekennzeichnet, dass** die holographische Information vermittelnde Beschichtung (6, 7, 8, 9) außenseitig eine heißsiegelfähige Schicht (9) besitzt.

3. Sicherheitsfaden nach Anspruch 2, **dadurch gekennzeichnet, dass** die heißsiegelfähige Schicht (9) auf Basis eines hydroxy-modifizierten Vinylcopolymers hergestellt ist.

4. Sicherheitsfaden nach einem der Ansprüche 1 bis 3, **dadurch gekennzeichnet, dass** die holographische Information vermittelnde Beschichtung (6, 7, 8, 9) als Prägehologramm ausgeführt ist und eine Kunststoffschicht (6) umfasst, in die eine diffraktive oder eine achromatisch wirksame Struktur geprägt ist, welche die holographische Information vermittelt.

5. Sicherheitsfaden nach Anspruch 4, **dadurch gekennzeichnet, dass** die geprägte Kunststoffschicht (6) aus einem strahlungshärtbaren Lacksystem hergestellt ist, vorzugsweise aus UV-strahlungshärtbarem Lack.

6. Sicherheitsfaden nach Anspruch 4 oder 5, **dadurch gekennzeichnet, dass** die geprägte Kunststoffschicht (6) aus einem radikalisch härtenden Acrylatlack oder einem kationisch härtenden Lack hergestellt ist.

7. Sicherheitsfaden nach einem der Ansprüche 4 bis 6, **dadurch gekennzeichnet, dass** die in die Kunststoffschicht (6) geprägte Struktur zumindest teilweise mit einer Reflexionsschicht (7) beschichtet ist.

8. Sicherheitsfaden nach Anspruch 7, **dadurch gekennzeichnet, dass** die Reflexionsschicht bereichsweise (4) vollständig entfernt ist.

9. Sicherheitsfaden nach Anspruch 1 bis 8, **dadurch gekennzeichnet, dass** die zweite Oberfläche (5a) durch eine Polycarbonat-Schicht gebildet wird.

10. Mehrschichtiger Datenträger (1), umfassend eine Trägerschicht (10; 11), eine transparente Deckschicht (12) und angrenzend an diese beiden Schichten einen mehrschichtigen Sicherheitsfade (3) nach wenigstens einen der Ansprüche 1 bis 9, wobei die zweite Oberfläche (5a) der Trägerfolie (5) mit einer der beiden an die Trägerfolie angrenzenden Schichten (10; 11; 12) des Datenträgers unmittelbar verbunden ist, **dadurch gekennzeichnet, dass** die zweite Oberfläche (5a) der Trägerfolie (5) des Sicherheitsfadens (3) und die daran angrenzende Schicht (10; 11; 12) des Datenträgers (1) aus Materialschichten bestehen, die durch Heißlaminieren einen festen Verbund miteinander eingehen können.

11. Datenträger nach Anspruch 10, **dadurch gekennzeichnet, dass** die zweite Oberfläche (5a) der Trägerfolie (5) des Sicherheitsfadens und die daran angrenzende Schicht (10; 11; 12) des Datenträgers (1) aus dem gleichen oder aus unterschiedlichen thermoplastischen Kunststoffen hergestellt sind.

12. Datenträger nach Anspruch 10 oder 11, **dadurch gekennzeichnet, dass** die zweite Oberfläche (5a) der Trägerfolie (5) des Sicherheitsfadens (3) durch eine Schicht aus Polycarbonat (PC), Polyethylenterephthalat (PETG), Polyvinylchlorid (PVC) oder einem anderen Kunststoff gebildet ist, der mit PC einen festen Verbund durch Heißlaminieren eingehen kann, und dass die daran angrenzende Schicht (10; 11; 12) des Datenträgers (1) eine PC-Schicht ist.

13. Datenträger nach einem der Ansprüche 10 bis 12, **dadurch gekennzeichnet, dass** sowohl die an den Sicherheitsfaden (3) angrenzende Trägerschicht (10; 11) des Datenträgers (1) als auch die an den Sicherheitsfaden (3) angrenzende transparente Deckschicht (12) des Datenträgers (1) PC-Schichten sind.

14. Datenträger nach einem der Ansprüche 10 bis 13, gekennzeichnet durch einen Sicherheitsfaden (3) nach einem der Ansprüche 1 bis 9.

15. Verfahren zur Herstellung eines mehrschichtigen Datenträgers (1) nach einem der Ansprüche 10 bis 14, umfassend die Schritte:
- Zusammenführen der transparenten Deckschicht (12) und der Trägerschicht (10; 11) mit dem mehrschichtigen Sicherheitsfaden (3) derart, dass die Trägerfolie (5) des Sicherheitsfadens (3) mit ihrer zweiten Oberfläche (5a) unmittelbar an eine der beiden vorgenannten Schichten (10; 11; 12) angrenzt, und
- Laminieren der Deckschicht (12), Trägerschicht (10; 11) und des dazwischen liegenden Sicherheitsfadens (3) miteinander unter Anwendung von Druck und Temperatur derart, dass die Trägerfolie (5) des Sicherheitsfadens (3) mit einer der beiden vorgenannten Schichten (10; 11; 12) einen Verbund eingeht.

16. Verfahren zur Herstellung eines Sicherheitsfadens nach einem der Ansprüche 1 bis 9, gekennzeichnet durch den Schritt des Aufbringens einer Schicht (6) aus einem strahlungshärtbaren Lack, in den die holographische Information geprägt ist oder geprägt wird, auf die erste, als Polycarbonatschicht ausgebildete Oberfläche der Trägerfolie (5) und den weiteren Schritt des Bestrahlens des Schichtaufbaus.

17. Verfahren nach Anspruch 16, **dadurch gekennzeichnet, dass** die Bestrahlung mittels eines dotierten UV-Strahlers erfolgt.

18. Verfahren nach einem der Ansprüche 16 oder 17, **dadurch gekennzeichnet, dass** der strahlungshärtbare Lack mit einer Viskosität im Bereich von 10 bis 30 DIN-sec, vorzugsweise im Bereich von 15 bis 25 DIN-sec, aufgebracht wird.

## Claims

1. A multilayer security thread (3) for a card-shaped data carrier (1), comprising a carrier foil (5) having a first surface and a second surface (5a), wherein the first surface bears a coating (6, 7, 8, 9) conveying a holographic information item, wherein the second surface (5a) is formed by a layer of a thermoplastic plastic that can form a firm bond with a polycarbonate layer through hot lamination, **characterized in that** the thickness of the carrier foil (5) is in the range of 20 µm to 50 µm, preferably in the range of 25 µm to 35 µm.

2. The security thread according to claim 1, **characterized in that** the coating (6, 7, 8, 9) conveying the holographic information has a heat-sealable layer (9) on the outside.

3. The security thread according to claim 2, **characterized in that** the heat-sealable layer (9) is produced on the basis of a hydroxy-modified vinyl copolymer.

4. The security thread according to any of the claims 1 to 3, **characterized in that** the coating (6, 7, 8, 9) conveying the holographic information is configured as an embossed hologram and comprises a plastic layer (6) in which there is embossed a diffractive or achromatically active structure conveying the holographic information.

5. The security thread according to claim 4, **characterized in that** the embossed plastic layer (6) is produced of a radiation-curable lacquer system, preferably of a UV radiation-curable lacquer.

6. The security thread according to claim 4 or 5, **characterized in that** the embossed plastic layer (6) is produced of a radically curing acrylate lacquer or a cationically curing lacquer.

7. The security thread according to any of the claims 4 to 6, **characterized in that** the structure embossed in the plastic layer (6) is at least partially coated with a reflective layer (7).

8. The security thread according to claim 7, **characterized in that** the reflective layer is completely removed regionally (4).

9. The security thread according to claims 1 to 8, **characterized in that** the second surface (5a) is formed by a polycarbonate layer.

10. A multilayer data carrier (1), comprising a carrier layer (10; 11), a transparent cover layer (12) and, adjoining these two layers, a multilayer security thread (3) according to at least one of the claims 1 to 9, wherein the second surface (5a) of the carrier foil (5) is directly connected with one of the two layers (10; 11; 12) of the data carrier adjoining the carrier foil, **characterized in that** the second surface (5a) of the carrier foil (5) of the security thread (3) and the layer (10; 11; 12) of the data carrier (1) adjoining the former consist of material layers which can form a firm bond with each other through hot lamination.

11. The data carrier according to claim 10, **characterized in that** the second surface (5a) of the carrier foil (5) of the security thread and the layer (10; 11; 12) of the data carrier (1) adjoining the former are produced of the same or of different thermoplastic plastics.

12. The data carrier according to claim 10 or 11, **characterized in that** the second surface (5a) of the carrier foil (5) of the security thread (3) is formed by a layer of polycarbonate (PC), polyethylene terephthalate (PETG), polyvinyl chloride (PVC) or a different plastic that can form a firm bond with PC through hot lamination, and **in that** the layer (10; 11; 12) of the data carrier (1) adjoining the former is a PC layer.

13. The data carrier according to any of the claims 10 to 12, **characterized in that** both the carrier layer, (10; 11) of the data carrier (1) adjoining the security thread (3) and the transparent cover layer (12) of the data carrier (1) adjoining the security thread (3) are PC layers.

14. The data carrier according to any of the claims 10 to 13, **characterized by** a security thread (3) according to any of the claims 1 to 9.

15. A method for producing a multilayer data carrier (1) according to any of the claims 10 to 14, comprising the steps of:
- joining the transparent cover layer (12) and the carrier layer (10; 11) with the multilayer security thread (3) in such a fashion that the carrier foil (5) of the security thread (3) directly adjoins either of the two above-mentioned layers (10; 11; 12) with its second surface (5a), and
- laminating the cover layer (12), carrier layer (10; 11) and the interposed security thread (3) with each other by applying pressure and temperature, such that the carrier foil (5) of the security thread (3) forms a bond with either of the two above-mentioned layers (10; 11; 12).

16. A method for producing a security thread according to any of the claims 1 to 9, **characterized by** the step of applying a layer (6) of a radiation-curable lacquer, into which the holographic information was embossed or is embossed, to the first surface of the carrier foil (5) configured as a polycarbonate layer, and the further step of irradiating the layer structure.

17. The method according to claim 16, **characterized in that** the irradiation is effected by means of a doped UV emitter.

18. The method according to any of the claims 16 or 17, **characterized in that** the radiation-curable lacquer is applied with a viscosity in the range of 10 to 30 DIN-sec, preferably in the range of 15 to 25 DIN-sec.

## Revendications

1. Fil de sécurité (3) multicouche destiné à un support de données (1) en forme de carte, comprenant un film support (5) ayant une première surface et une deuxième surface (5a), la première surface portant un revêtement (6, 7, 8, 9) procurant une information holographique, la deuxième surface (5a) étant constituée par une couche consistant en une matière plastique thermoplastique qui peut, par le biais du laminage à chaud, forment une liaison ferme avec une couche de polycarbonate, **caractérisé en ce que** l'épaisseur du film support (5) est de l'ordre de 20 µm à 50 µm, de préférence de l'ordre de 25 µm à 35 µm.

2. Fil de sécurité selon la revendication 1, **caractérisé en ce que** le revêtement (6, 7, 8, 9) procurant l'information holographique possède sur sa face extérieure une couche thermosoudable (9).

3. Fil de sécurité selon la revendication 2, **caractérisé en ce que** la couche (9) thermosoudable est fabriquée sur la base d'un copolymère vinylique hydroxy-modifié.

4. Fil de sécurité selon une des revendications de 1 à 3, **caractérisé en ce que** le revêtement (6, 7, 8, 9) procurant l'information holographique est réalisé sous forme d'hologramme gaufré et comprend une couche de matière plastique (6) dans laquelle une structure diffractive ou à effet achromatique est gaufrée, laquelle procure l'information holographique.

5. Fil de sécurité selon la revendication 4, **caractérisé en ce que** la couche de matière plastique (6) gaufrée est fabriquée à partir d'un système de vernis durcissable par rayonnement, de préférence à partir d'un vernis durcissable par rayonnement UV.

6. Fil de sécurité selon la revendication 4 ou 5, **caractérisé en ce que** la couche de matière plastique (6) gaufrée est fabriquée à partir d'un vernis acrylate à durcissement par radicaux ou à partir d'un vernis à durcissement cationique.

7. Fil de sécurité selon une des revendications de 4 à 6, **caractérisé en ce que** la structure gaufrée dans la couche de matière plastique (6) est revêtue au moins partiellement d'une couche réfléchissante (7).

8. Fil de sécurité selon la revendication 7, **caractérisé en ce que** la couche réfléchissante est par endroits (4) entièrement enlevée.

9. Fil de sécurité selon la revendication de 1 à 8, **caractérisé en ce que** la deuxième surface (5a) est constituée par une couche de polycarbonate.

10. Support de données (1) multicouche comprenant une couche support (10; 11), une couche de recouvrement (12) transparente et, de manière adjacente à ces deux couches, un fil de sécurité (3) multicouche selon au moins une des revendications de 1 à 9, la deuxième surface (5a) du film support (5) étant directement jointe à une des deux couches (10; 11; 12) du support de données adjacentes à la couche support, **caractérisé en ce que** la deuxième surface (5a) du film support (5) du fil de sécurité (3) et la couche (10; 11; 12) du support de données (1) y étant adjacente consistent en des couches de matériau qui peuvent, par le biais d'un laminage à chaud, former l'une avec l'autre une liaison ferme.

11. Support de données selon la revendication de 10, **caractérisé en ce que** la deuxième surface (5a) du film support (5) du fil de sécurité et la couche (10; 11; 12) du support de données (1) y étant adjacente sont fabriquées à partir de la même ou à partir de différentes matières plastiques thermoplastiques.

12. Support de données selon la revendication de 10 ou 11, **caractérisé en ce que** la deuxième surface (5a) du film support (5) du fil de sécurité (3) est constituée par une couche de polycarbonate (PC), de téréphtalate de polyéthylène (PETG), de chlorure de polyvinyle (PVC) ou d'une autre matière plastique qui peut former avec du PC une liaison ferme par le biais d'un laminage à chaud, et **en ce que** la couche (10; 11; 12) du support de données (1) y étant adjacente est une couche de PC.

13. Support de données selon une des revendications de 10 à 12, **caractérisé en ce que** tant la couche support (10; 11) du support de données (1) adjacente au fil de sécurité (3) que la couche de recouvrement (12) transparente du support de données (1) adjacente au fil de sécurité (3) sont des couches de PC.

14. Support de données selon une des revendications de 10 à 13, **caractérisé par** un fil de sécurité (3) selon une des revendications de 1 à 9.

15. Procédé de fabrication d'un support de données (1) multicouche selon une des revendications de 10 à 14, comprenant les étapes:
• accolement de la couche de recouvrement (12) transparente et de la couche support (10; 11) avec le fil de sécurité (3) multicouche, de telle sorte que le film support (5) du fil de sécurité (3) est, par sa deuxième surface (5a), directement adjacent à une des deux couches (10; 11; 12) précitées, et
• laminage, les unes aux autres, de la couche de recouvrement (12), de la couche support (10; 11) et du fil de sécurité (3) se trouvant entre ces dernières, sous l'application de pression et de température, de telle sorte que le film support (5) du fil de sécurité (3) forme une liaison avec une des deux couches (10; 11; 12) précitées.

16. Procédé de fabrication d'un fil de sécurité selon une des revendications de 1 à 9, **caractérisé par** l'étape de l'application d'une couche (6) se composant d'un vernis durcissable par rayonnement dans lequel l'information holographique est ou sera gaufrée, sur la première surface du film support (5) réalisée sous forme de couche de polycarbonate, et par l'étape supplémentaire de l'irradiation de la structure à couches.

17. Procédé selon la revendication 16, **caractérisé en ce que** l'irradiation a lieu au moyen d'un émetteur UV à dopage.

18. Procédé selon une des revendications 16 ou 17, **caractérisé en ce que** le vernis durcissable par rayonnement est appliqué à une viscosité de l'ordre de 10 à 30 DIN-sec, de préférence de l'ordre de 15 à 25 DIN-sec.
